(19) Europäisches Patentamt
European Patent Office
Office européen des brevets

(11) Veröffentlichungsnummer: **0 361 280 A2**

# (12) EUROPÄISCHE PATENTANMELDUNG

(21) Anmeldenummer: **89117289.2**

(22) Anmeldetag: **19.09.89**

(51) Int. Cl.[5]: **B32B 15/08 , B32B 27/32 , B32B 27/20**

(30) Priorität: **28.09.88 DE 3832880**

(43) Veröffentlichungstag der Anmeldung: **04.04.90 Patentblatt 90/14**

(84) Benannte Vertragsstaaten: **BE DE ES FR GB IT**

(71) Anmelder: **HOECHST AKTIENGESELLSCHAFT**
**Postfach 80 03 20**
**D-6230 Frankfurt am Main 80(DE)**

(72) Erfinder: **Bothe, Lothar, Dr.**
**Am Heiligenhaus 9**
**D-6500 Mainz-Gonsenheim(DE)**
Erfinder: **Schlögl, Gunter, Dr.**
**Finkenweg 2**
**D-6233 Kelkheim(DE)**

## (54) Biaxial orientierte Polypropylenfolie für die Metallisieranwendung.

(57) Es wird eine metallisierbare, siegelfähige, biaxial orientierte Mehrschichtfolie für die Metallisieranwendung beschrieben, die eine Basisschicht im wesentlichen aus Polypropylen, eine erste polyolefinische siegelfähige Oberflächenschicht und eine zweite polyolefinische metallisierbare Oberflächenschicht umfaßt. Die zweite polyolefinische metallisierbare Oberflächenschicht enthält ein Propylen-Ethylen-Copolymeres, das einen Ethylengehalt von 1,2 bis 2,8 Gew.-%, einen Verteilungsfaktor $V_F$ von größer 10, eine Schmelzenthalpie $\Delta H_m$ größer 90 J/g und eine Thermooxidationstemperatur $T_{ox}$ von größer 240 °C besitzt.

EP 0 361 280 A2

Xerox Copy Centre

# Biaxial orientierte Polypropylenfolie für die Metallisieranwendung

Die Erfindung betrifft eine metallisierbare, siegelfähige, biaxial orientierte Mehrschichtfolie umfassend eine Basisschicht im wesentlichen aus Polypropylen, eine erste polyolefinische siegelfähige Oberflächenschicht und eine zweite polyolefinische metallisierbare Oberflächenschicht.

In der EP-A-0 023 389 wird eine coextrudierte Mehrschichtfolie für die Metallisieranwendung beschrieben, die aus einer Kernschicht aus im wesentlichen Polypropylen besteht, die beidseitig Deckschichten aus einem Ethylen-Olefincopolymerisat besitzt, wobei der Ethylengehalt 85 bis 99,75 Gew.-% beträgt und das Molekül des Alpha-Olefins 3 bis 6 Kohlenstoffatome enthält. Diese Folie weist den Nachteil auf, daß ihre Kratzfestigkeit noch verbesserungswürdig und ihr Glanz unbefriedigend ist.

In der EP-A-0 021 672 wird weiterhin ein durch Coextrusion hergestelltes Laminat beschrieben, bestehend aus einer Polypropylenkernschicht und einem Ethylen-Propylen-Copolymerisat auf wenigstens einer Außenseite der Kernschicht. Die Außenschicht enthält 2 bis 4 Gew.-% Ethylen, wobei Außenschichten mit 2,5 bis 3,5 Gew.-% Ethylen besonders bevorzugt sind. Durch das Weglassen von Gleitmitteln, insbesondere von Fettsäureamiden, in der Folie wird eine gute Haftung zwischen der Außenschicht und einer aufgebrachten Metallschicht erreicht. Diese Folie ist aber noch verbesserungswürdig, insbesondere im Hinblick auf die Metallhaftung, ihre Kratzfestigkeit und ihre optischen Eigenschaften.

In der DE-A-37 01 307 werden siegelbare Mehrschichtfolien für die Metallisieranwendung beschrieben, deren metallisierbare Oberflächenschicht aus Polypropylen besteht. Diese Folien zeigen den Nachteil, daß sie sich schlecht oberflächenbehandeln lassen, d. h. daß sie eine schlechte Langzeitmetallisierbarkeit besitzen, weil ihre durch die Oberflächenbehandlung erreichte Affinität zu Metallen nach kurzer Zeit schon deutlich spürbar abklingt.

Der vorliegenden Erfindung lag die Aufgabe zugrunde, eine metallisierbare Folie zu schaffen, deren Eigenschaftsprofil im Hinblick auf die Kombination der Merkmale:

a) gute Verarbeitungseigenschaften beim Wickeln, Schneiden, Metallisieren, Bedrucken oder Extrusionsbeschichten bzw. Laminieren sowie der Maschinengängigkeit in Verpackungsmaschinen;

b) sehr gute und vor allem über längere Zeit hinweg konstant bleibende Metallhaftung;

c) ein optisch gutes Erscheinungsbild der Folie, insbesondere ein hoher Glanz der Metallschicht bzw. der metallisierbaren Oberfläche;

d) hohe Kratzfestigkeit bei mechanischer Einwirkung;

e) gute Siegeleigenschaften und

f) geringer Geruch optimiert ist.

Gelöst wird diese Aufgabe durch eine Folie der eingangs genannten Gattung, deren kennzeichnende Merkmale darin bestehen, daß die zweite polyolefinische metallisierbare Oberflächenschicht ein Propylen-Ethylen-Copolymeres enthält, das einen Ethylengehalt von 1,2 bis 2,8 Gew.-%, einen Verteilungsfaktor $V_F$ von größer 10, eine Schmelzenthalpie $\Delta H_m$ größer 90 J/g und eine Thermooxidationstemperatur $T_{ox}$ von größer 240 °C besitzt.

Der Ethylengehalt und der Verteilungsfaktor des Copolymeren werden mit Hilfe der $C_{13}$-NMR-Spektroskopie bestimmt. Die Messungen wurden mit einem Kernresonanzspektrometer der Firma Bruker, Modell HX-270 (Deutschland), das mit einem Rechner der Firma Bruker, Typ Bruker Aspect 2000 ausgerüstet war, durchgeführt.

Das zu charakterisierende Ethylen-Propylen-Copolymere wird in einem Lösungsmittelgemisch aus 65 Vol-% Hexachlorbenzol und 35 Vol-% 1,1-Dideuterotetrachlorethan gelöst, so daß eine 10 Gew.-%-Lösung entstand. Als Bezugsstandard wurde Octamethyltetrasiloxan (OMTS) zugegeben. Das 67,9-MHZ-$C_{13}$-Kernresonanzspektrum wurde bei 130 °C gemessen. Die Auswertung der Spektren erfolgte nach der in J.C. Randall, Polymer Sequence Distribution (Academic Press, New York, 1977) beschriebenen Vorgehensweise.

Der Verteilungsfaktor ist definiert als

$$V_F = \frac{C_i}{C_G - C_i}$$

wobei $C_G$ den Gesamtgehalt an Ethylen im Copolymerisat in Gew.-% bedeutet und $C_i$ den Anteil an Ethylen in Gew.-%, der als isolierter Ethylenanteil vorliegt, d. h. ein einzelner Etylenbaustein befindet sich in der nachfolgend skizzierten Art isoliert zwischen zwei Propylenbausteinen:

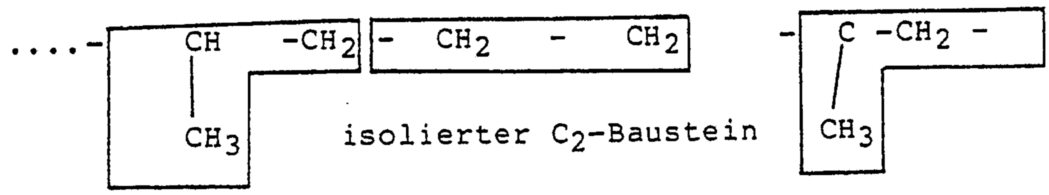


Die Schmelzenthalpie $\Delta H_m$ wird mittels der Methode der Differential-Scanning-Calorimetrie (DSC-Messung) bestimmt. Einige Milligramm (3 bis 5 mg) des zu charakterisierenden Rohstoffs werden in einem Differentialkalorimeter mit einer Heizgeschwindigkeit von 20 °C/min aufgeheizt. Die Schmelzenthalpie $\Delta H_m$ des Rohstoffs ergibt sich aus der Fläche des jeweiligen Schmelzpeaks.

Der Untergrund beiderseits des Schmelzpeaks wird durch eine lineare Tangente abgetrennt.

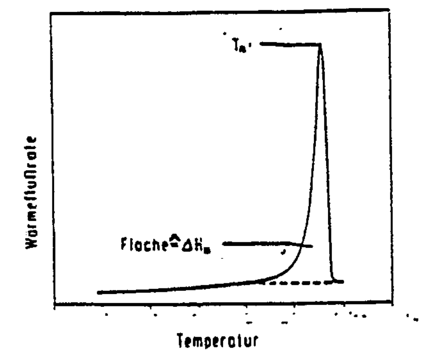


Schmelzpunkt: DSC-Messung, Maximum der Schmelzkurve, Aufheizgeschwindigkeit 20 °C/min.

Die Bestimmung der idealisierten Thermooxidationstemperatur $T_{ox}$ erfolgt auf folgende Weise:

2 bis 5 mg des zu untersuchenden Rohstoffs werden in einem Differentialkalorimeter mit einer Heizrate von 20 K/min aufgeheizt. Als Spülgas wird Luft verwendet, die Ausgangstemperatur ist 295 K. Bei der Messung wird die Veränderung des Wärmeflusses mit ansteigender Temperatur dargestellt. Während diese Kurve nach dem Schmelzen des Rohstoffs zunächst nahezu waagerecht verläuft (Basislinie), steigen diese Werte infolge Oxidation ab einer bestimmten Temperatur stark an (exothermer Ast).

Die idealisierte Thermooxidationstemperatur wird als Schnittpunkt der den exothermen Ast des Thermogramms verlängernden Geraden mit der Basislinie definiert.

Überraschenderweise hat sich gezeigt, daß die genannten Parameter für das Propylen-Ethylen-Copolymere der zweiten polyolefinischen metallisierbaren Oberflächenschicht der erfindungsgemäßen Folie in sehr engen Grenzen eingehalten werden müssen, um alle in der Aufgabenstellung genannten Eigenschaften gleichzeitig optimal zu realisieren. Der Ethylengehalt und der Verteilungsfaktor $V_F$ des Copolymeren sind für die Oberflächenbehandelbarkeit mittels elektrischer Coronaentladung, für die Langzeitmetallisierbarkeit sowie für die optischen Eigenschaften von Bedeutung. Liegt der Ethylengehalt unter 1,2 Gew.-%, ist die Coronabehandelbarkeit schlecht sowie das Abklingverhalten der Behandlungswirkung ungünstig. Liegt der Ethylengehalt über 2,5 Gew.-% oder der Verteilungsfaktor unter 10, so verschlechtern sich die optischen Eigenschaften, insbesondere der Oberflächenglanz.

Die Schmelzenthalpie des Copolymeren beeinflußt die Kratzfestigkeit der Folie. Liegt sie unter 90 J/g, so verschlechtert sich die Kratzfestigkeit deutlich.

Die Thermooxidationstemperatur ist für die Metallhaftung von besonderer Bedeutung. Liegt die Thermooxidationstemperatur der metallisierbaren Deckschicht unter 240 °C, so bilden sich aufgrund der Coronabehandlung Abbauprodukte in dem Maße auf der Oberfläche, daß die Haftung einer folgenden Metallisierung verschlechtert wird.

Die Basisschicht der erfindungsgemäßen Mehrschichtfolie besteht aus einem Propylenpolymeren, das zum überwiegenden Teil aus Propylen besteht und einen Schmelzpunkt vorzugsweise von 150 bis 170 °C besitzt. Isotaktisches Poly propylen mit einem n-heptanlöslichen Anteil von 15 Gew.-% und weniger, Copolymere von Ethylen und Propylen mit einem Ethylengehalt von 5 Gew.-% oder weniger, Copolymere von Propylen mit $C_4$-$C_8$-Alpha-Olefinen mit einem Alpha-Olefin-Gehalt von 5 Gew.-% oder weniger stellen bevorzugte Propylenpolymere für die Basisschicht dar, wobei isotaktisches Polypropylen ganz besonders bevorzugt ist. Das Propylenpolymere der Basisschicht hat im allgemeinen einen Schmelzflußindex von 1,5

bis 5 g/10 min bei 230 °C und 2,16 kg Belastung (DIN 53 735).

Die erste polyolefinische siegelfähige Oberflächenschicht der erfindungsgemäßen Mehrschichtfolie besteht aus siegelfähigen olefinischen Polymeren. Geeignete Alpha-Olefinpolymere sind ethylenhaltige Polymere, Copolymere von Ethylen und Propylen, Ethylen oder Propylen und 1-Buten oder anderen Alpha-Olefinen mit 5 bis 10 Kohlenstoffatomen, Terpolymere aus Ethylen, Propylen und Butylen oder einem anderen Alpha-Olefin mit 5 bis 10 Kohlenstoffatomen oder Mischungen aus diesen Polymeren. Ethylen-Propylen-Copolymere, Ethylen-Butylen-Copolymere, Propylen-Butylen-Copolymere, Ethylen-Propylen-Butylen-Terpolymere oder Mischungen aus diesen Polymeren werden bevorzugt eingesetzt. Besonders bevorzugte Alpha-Olefinpolymere für die Siegelschicht sind Ethylen-Propylen-Copolymere mit Propylen als Hauptkomponente und einem Ethylengehalt von 4 bis 10 Gew.-%. Der Siegelrohstoff besitzt einen niedrigeren Schmelzpunkt als das Propylenpolymere der Basisschicht. Der Schmelzpunkt liegt im allgemeinen im Bereich von 80 bis 150 °C, vorzugsweise 100 bis 140 °C. Der Schmelz flußindex des Siegelrohstoffs liegt höher als jener des Propylenpolymeren der Basisschicht. Das Olefinpolymere für die Siegelschicht hat einen Schmelzflußindex von im allgemeinen 3 bis 15 g/10 min, vorzugsweise 3 bis 9 g/10 min, bei 230 °C und 2,16 kg Belastung (DIN 53 735).

Die metallisierbare Oberflächenschicht besteht aus einem Ethylen-Propylen-Copolymeren, das vorzugsweise einen Ethylengehalt von 1,4 bis 1,8 Gew.-%, einen Verteilungsfaktor $V_F$ von größer als 10, insbesondere größer als 15, eine Schmelzenthalpie $\Delta H_m$ von größer als 90 J/g, insbesondere im Bereich von 95 bis 110 J/g, und eine bevorzugte Thermooxidationstemperatur $T_{ox}$ von mehr als 245 °C besitzt. Der Schmelzflußindex des Copolymeren für die zweite polyolefinische metallisierbare Oberflächenschicht liegt vorzugsweise zwischen 3 und 12 g/10 min, jedenfalls aber höher als der des Propylenpolymeren der Basisschicht.

Um bestimmte Eigenschaften der erfindungsgemäßen Polyolefinfolie noch weiter zu verbessern, kann die erste polyolefinische siegelfähige Oberflächenschicht ein Antiblockmittel enthalten.

Geeignete Antiblockmittel für diese Schicht sind anorganische Zusatzstoffe wie Siliziumdioxid, Kalziumkarbonat, Magnesiumsilikat und/oder Antiblockmittel wie z. B. Polyamid, Polyester sowie insbesondere Benzoguanamin-Formaldehyd-Copolymere und dergleichen. Wesentlich für das Antiblockmittel ist, daß die mittlere Teilchengröße zwi schen 1 und 4 µm liegt und der Formfaktor kleiner als 3 ist. Siliziumdioxid und Kalziumkarbonat sind als Antiblockmittel bevorzugt. Besonders bevorzugt werden diese Mittel eingesetzt, wenn sie kugelförmige Gestalt besitzen. Derartige kugelförmige anorganische Materialien und deren Zusatz zu Folien aus thermoplastischen Kunststoffen werden z. B. in der EP-A-0 236 945 und der DE-A-38 01 535 beschrieben. Die Zusatzmenge an Antiblockmittel beträgt 0,1 bis 1 Gew.-%, vorzugsweise 0,1 bis 0,3 Gew.-%, bezogen auf das Gesamtgewicht der ersten polyolefinischen siegelfähigen Oberflächenschicht.

Die zweite polyolefinische metallisierbare Oberflächenschicht enthält vorzugsweise einen mehrkernigen phenolischen Stabilisator mit einer Molmasse von mehr als 300 g/mol, vorzugsweise mehr als 700 g/mol. Als Stabilisator des Copolymeren der zweiten polyolefinischen metallisierbaren Oberflächenschicht eignen sich besonders Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol. Die Zusatzmenge beträgt 0,2 bis 0,6 Gew.-%, vorzugsweise 0,3 bis 0,4 Gew.-%. Zur Neutralisation der Katalysatorreste des Copolymeren wird vorzugsweise ein anorganischer, partikelförmiger Stoff eingesetzt. Kalziumkarbonate einer mittleren Teilchengröße von höchstens 0,07 mm, einer absoluten Teilchengröße von kleiner 5 µm und einer spezifischen Oberfläche von mindestens 40 $m^2$/g werden bevorzugt eingesetzt. Die Zusatzmenge beträgt 0,01 bis 0,05 Gew.-%.

Die Gesamtdicke der erfindungsgemäßen Folie liegt zwischen 10 und 70 µm, vorzugsweise zwischen 15 und 50 µm, wobei die Oberflächenschichten jeweils eine Dicke von etwa 0,5 bis 1 µm aufweisen. Die Folie kann nach üblichen Verfahren metallisiert werden und zeichnet sich durch eine sehr gute Metallhaftung aus.

Die Herstellung der erfindungsgemäßen aus drei Schichten gebildeten Polyolefinfolie erfolgt nach dem bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die durch Coextrusion erhaltene Folie zur Verfestigung abgekühlt wird, die Folie biaxial gestreckt (orientiert), die biaxial gestreckte Folie thermofixiert und an der zur Coronabehandlung vorgesehenen metallisierbaren Oberflächenschicht coronabehandelt wird. Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist. Zunächst wird also wie beim üblichen Coextrusionsverfahren das Polymere oder die Polymermischung der einzelnen Schichten in einem Extruder komprimiert oder verflüssigt. Die Schmelzen werden dann gleichzeitig durch eine Flachdüse (Breitschlitzdüse) gepreßt, und die ausgepreßte mehrschichtige Folie wird auf

einer oder mehreren Walzen, die durch Kühlung auf etwa 30 bis 50 °C gehalten werden, abgekühlt und verfestigt. Die so erhaltene Folie wird dann längs und quer zur Extrusionsrichtung gestreckt, was zu einer Orientierung der Molekülketten führt. In Längsrichtung wird vorzugsweise 4 bis 7 : 1 und in Querrichtung vorzugsweise 8 bis 10 : 1 gestreckt. Die Längsstreckung wird bei einer Folientemperatur von vorzugsweise 120 bis 140 °C durchgeführt und die Querstreckung vorzugsweise bei 160 bis 175 °C. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. An die biaxiale Streckung der Folie schließt sich ihre Thermofixierung (Wärmebehandlung) an. Dabei wird die Folie etwa 0,5 bis 10 s lang bei einer Temperatur von 150 bis 160 °C gehalten. Die Coronabehandlung erfolgt vorzugsweise mit einer Wechselspannung von etwa 10 000 V und 10 000 Hz. Die so hergestellte Folie wird in üblicher Weise mit Hilfe einer Aufwickeleinrichtung aufgewickelt.

Die erfindungsgemäße Polyolefin-Mehrschichtfolie eignet sich insbesondere für die Metallisieranwendung. Sie besitzt nämlich all die wichtigen Eigenschaften, die von Polyolefinfolien im Hinblick auf den Einsatz als siegelbare Metallisierfolie gefordert werden. Sie weist inbesondere auf:

- sehr gute optische Eigenschaften, insbesondere Glanz der metallisierbaren Oberfläche,
- hohe Kratzfestigkeit der metallisierbaren Oberfläche, - gute Sofort- und Langzeitmetallisierbarkeitseigenschaften,
- gute Oberflächenbehandelbarkeit und gute Geruchseigenschaften,
- gute Weiterverarbeitungseigenschaften,
- gute Siegeleigenschaften.

Die Erfindung wird nun anhand von Ausführungsbeispielen noch näher erläutert.

In den nachstehenden Beispielen und Vergleichsbeispielen handelt es sich jeweils um biaxial orientierte (Längsstreckverhältnis 5 : 1, Querstreckverhältnis 10 : 1) Polyolefinfolien mit einer Basisschicht und zwei Deckschichten, wobei die Basisschicht jeweils aus einem isotaktischen Polypropylen mit einem n-heptanlöslichen Anteil von 4 Gew.-%, mit einem Schmelzpunkt von 165 °C und einem Schmelzflußindex von 3,5 g/10 min bei 230 °C und 2,16 kg Belastung (DIN 53 735) als Hauptkomponente bebesteht. Die Basisschicht ist jeweils etwa 28 µm dick, und die beiden Deckschichten, welche die Basisschicht umgeben, sind jeweils etwa 1 µm dick. Die dreischichtigen Polyolefinfolien sind nach dem bekannten Coextrusionsverfahren hergestellt worden.

Beispiel 1

Die erste polyolefinische siegelbare Deckschicht bestand aus einem Copolymerisat aus Ethylen- und Propylenbausteinen mit einem Ethylenanteil von 6 Gew.-%, einem Propylenanteil von 93,7 Gew.-% und 0,3 Gew.-% $SiO_2$ mit einem mittleren Teilchendurchmesser von 2 µm und einem Formfaktor von 1. Die Prozentangaben sind bezogen auf das Gesamtgewicht der ersten polyolefinischen siegelbaren Deckschicht. Der Schmelzflußindex $i_{2,16}$ des Polymeren der ersten Deckschicht lag bei 8 g/10 min, sein Schmelzpunkt bei 136 °C.

Die zweite polyolefinische metallisierbare Deckschicht bestand aus einem Copolymerisat aus Ethylen- und Propylenbausteinen mit einem Ethylengehalt von 1,9 Gew.-%, einem Propylengehalt von 97,7 Gew.-% und einem Gehalt an Pentaerythrityl-Tetrakis-3-(3,5-di-Tertiärbutyl-4-Hydroxyphenyl)-Propionat von 0,35 Gew.-%, wobei die Prozentangaben bezogen sind auf das Gesamtgewicht der zweiten polyolefinischen Deckschicht. Die Neutralisation des Polymeren erfolgte mit 0,05 Gew.-% Calziumkarbonat mit einem mittleren Teilchendurchmesser von 0,02 µm und einer spezifischen Oberfläche von 100 $m^2$/g. Das Polymere besaß folgende Eigenschaften:

- Verteilungsfaktor $V_F$ = 19
- Schmelzenthalpie $\Delta H_m$ = 95 J/g
- idealisierte Thermooxidationstemperatur $T_{ox}$ = 255 °C
- Schmelzflußindex $i_{2,16}$ = 5 g/10 min

Die an der Folie des Beispiels 1 gemessenen Eigenschaften sind den Eigenschaften der Folien aus den nachfolgenden Vergleichsbeispielen in Form einer Tabelle am Ende der Beschreibung gegenübergestellt.

Vergleichsbeispiel 1

Die erste polyolefinische Deckschicht der Folie nach Vergleichsbeispiel 1 hatte die gleiche Zusammensetzung wie diejenige der Folie aus Beispiel 1. Die zweite polyolefinische Deckschicht wies einen

Ethylengehalt von 2 Gew.-%, einen Propylengehalt von 97,9 Gew.-%, einen Stabilisatorgehalt (Stabilisator wie in Beispiel 1) von 0,05 Gew.-% und Neutralisationsmittel (wie in Beispiel 1) von 0,05 Gew.-% auf. Das Polymere besaß folgende Eigenschaften:

- Verteilungsfaktor $V_F$ = 19
- Schmelzenthalpie $\Delta H_m$ = 95 J/g
- idealisierte Thermooxidationstemperatur $T_{ox}$ = 225 °C
- Schmelzflußindex $i_{2,16}$ = 5 g/10 min

Die Eigenschaften der Folie ergeben sich aus der Tabelle.

Vergleichsbeispiel 2

Die erste polyolefinische Deckschicht der Folie nach Vergleichsbeispiel 2 hatte die gleiche Zusammensetzung wie diejenige der Folie aus Beispiel 1. Die zweite polyolefinische Deckschicht wies einen Ethylengehalt von 2,9 Gew.-%, einen Propylengehalt von 96,7 Gew.-%, einen Stabilisatorgehalt (Stabilisator wie in Beispiel 1) von 0,35 Gew.-% und Neutralisationsmittel (wie in Beispiel 1) von 0,05 Gew.-% auf. Das Polymere besaß folgende Eigenschaften:

- Verteilungsfaktor $V_F$ = 14
- Schmelzenthalpie $\Delta H_m$ = 80 J/g
- idealisierte Thermooxidationstemperatur $T_{ox}$ = 255 °C
- Schmelzflußindex $i_{2,16}$ = 5,5 g/10 min

Die Eigenschaften der Folie ergeben sich aus der Tabelle.

Vergleichsbeispiel 3

Die erste polyolefinische Deckschicht der Folie nach Vergleichsbeispiel 3 hatte die gleiche Zusammensetzung wie diejenige der Folie aus Beispiel 1. Die zweite polyolefinische Deckschicht wies einen Ethylengehalt von 3,9 Gew.-%, einen Propylengehalt von 95,7 Gew.-%, einen Stabilisatorgehalt (Stabilisator wie in Beispiel 1) von 0,35 Gew.-% und Neutralisationsmittel (wie in Beispiel 1) von 0,05 Gew.-% auf. Das Polymere besaß folgende Eigenschaften:

- Verteilungsfaktor $V_F$ = 7
- Schmelzenthalpie $\Delta H_m$ = 72 J/g
- idealisierte Thermooxidationstemperatur $T_{ox}$ = 255 °C
- Schmelzflußindex $i_{2,16}$ = 7 g/10 min

Die Eigenschaften der Folie ergeben sich aus der Tabelle.

Vergleichsbeispiel 4

Die erste polyolefinische Deckschicht der Folie nach Vergleichsbeispiel 4 hatte die gleiche Zusammensetzung wie diejenige der Folie aus Beispiel 1. Die zweite polyolefinische Deckschicht wies einen Ethylengehalt von 0,5 Gew.-%, einen Propylengehalt von 99,15 Gew.-%, einen Stabilisatorgehalt (Stabilisator wie in Beispiel 1) von 0,3 Gew.-% und Neutralisationsmittel (wie in Beispiel 1) von 0,05 Gew.-% auf. Das Polymere besaß folgende Eigenschaften:

- Verteilungsfaktor $V_F$ = >20
- Schmelzenthalpie $\Delta H_m$ = 110 J/g
- idealisierte Thermooxidationstemperatur $T_{ox}$ = 255 °C
- Schmelzflußindex $i_{2,16}$ = 5 g/10 min

Die Eigenschaften der Folie ergeben sich aus der Tabelle.

Vergleichsbeispiel 5

Die erste polyolefinische Deckschicht der Folie nach Vergleichsbeispiel 5 hatte die gleiche Zusammensetzung wie diejenige der Folie aus Beispiel 1. Die zweite polyolefinische Deckschicht wies einen Ethylengehalt von 2 Gew.-%, einen Propylengehalt von 97,6 Gew.-%, einen Stabilisatorgehalt (Stabilisator wie in Beispiel 1) von 0,35 Gew.-% und Neutralisationsmittel (wie in Beispiel 1) von 0,05 Gew.-% auf. Das

Polymere besaß folgende Eigenschaften:
- Verteilungsfaktor $V_F$ = 3
- Schmelzenthalpie $\Delta H_m$ = 108 J/g
- idealisierte Thermooxidationstemperatur $T_{ox}$ = 255 °C
- Schmelzflußindex $i_{2,16}$ = 5,2 g/10 min

Die Eigenschaften der Folie ergeben sich aus der Tabelle.

Vergleichsbeispiel 6

Die erste polyolefinische Deckschicht der Folie nach Vergleichsbeispiel 6 hatte die gleiche Zusammensetzung wie diejenige der Folie aus Beispiel 1. Die zweite polyolefinische Deckschicht bestand aus einem Propylenhomopolymerisat mit folgenden Eigenschaften:
- Schmelzenthalpie $\Delta H_m$ = 125 J/g
- idealisierte Thermooxidationstemperatur $T_{ox}$ = 255 °C
- Schmelzflußindex $i_{2,16}$ = 5 g/10 min

Die Eigenschaften der Folie ergeben sich aus der nachfolgenden Tabelle.

Tabelle

| | Trübung | Glanz | Kratzfestigkeit | Oberflächenbehandelbarkeit | Metallhaftung | | Geruch | Abfallverhalten |
|---|---|---|---|---|---|---|---|---|
| | | | | | Kurzzeit | Langzeit | | |
| Beispiel 1 | + + | + + | + + | + + | + + | + + | + + | + + |
| VB 1 | + + | + + | + + | + + | + - | + - | + + | + + |
| VB 2 | - + | - + | - + | + + | + - | + - | -- | + + |
| VB 3 | - + | - + | -- | + + | + - | + - | -- | + + |
| VB 4 | + + | + + | + + | -- | + - | -- | + - | -- |
| VB 5 | -- | -- | + + | - + | + - | -- | + - | -- |
| VB 6 | + + | + + | + + | -- | + - | -- | + - | -- |

x) metallisierbare bzw. metallisierte Seite
+ + sehr gut
+ - gut
- + mäßig
-- schlecht

Zur Charakterisierung der Eigenschaften der Rohstoffe wie der fertig erstellten Folien wurden die eingangs genannten Meßmethoden benutzt. Darüber hinaus wurde die Trübung der Folie in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wurde. Die vier Lagen wurden gewählt, da man hierdurch den optimalen Meßbereich ausnutzt. Die Trübungsbewertung erfolgte mit ≤15 % = sehr gut, ≥15 % bis 25 % = mäßig und > 25 % = schlecht.

Der Glanz der Folien wurde mit einem Reflektometer von Dr. Lange, Neuss (Deutschland), ermittelt, der Meßwinkel betrug 85°.

Die Kratzfestigkeit wurde in Anlehnung an DIN 53 754 bestimmt. Für die Bestimmung der Kratzfestigkeit wurde das Abriebmeßgerät Taber Modell 503 Abraser der Firma Teledyne Taber benutzt, wobei Reibräder der Marke Calibrade R H18, die mit 250 g belastet wurden, eingesetzt wurden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut bezeichnet, wenn die Trübungszunahme < 20 % beträgt, mit mäßig, wenn die Trübungszunahme bei 20 bis 25 % liegt, und mit schlecht bei Trübungszunahmen von größer 25 %.

Die Coronabehandlung der Folienoberfläche wurde so ausgeführt, daß die behandelte Folienoberfläche jeweils eine Behandlungsintensität von 39 mN/m direkt nach der Behandlung besaß. Die Behandlungsintensität wurde mittels der sogenannten Tintenmethode (DIN 53 364) bestimmt.

Die Behandlungsintensitätsmessung wurde im Abstand von jeweils 14 Tagen wiederholt. Als sehr gut wurde das Abklingverhalten bezeichnet, wenn die Behandlungsintensität nach vier Monaten noch mindestens 37 mN/m betrug ($\Delta B \leq 2$ mN/m). Als schlecht wurde das Abklingverhalten bezeichnet, wenn die Behandlungsintensität kleiner als 35 mN/m betrug ($\Delta B \geq 4$ mN/m).

Der Geruch der Folien wurde mittels Geruchsprüfung beurteilt.

Aus der zu beurteilenden Folie wurde ein ca. 1 cm dicker Folienstapel (DIN A 4) hergestellt, der in Al-Folie eingeschlagen wurde. Zur Beurteilung des Geruchs wurde der Folienstapel nach 2 Tagen Lagerung aufgeblättert und zwischen den Folienlagen gerochen.

Geruchsnoten:

++ geringer Geruch
+- merkbarer Geruch
-- deutlicher Geruch

Coronabehandelbarkeit

Die Folien wurden unter gleichen Bedingungen einer elektrischen Coronabehandlung unterzogen. Während bei Beispiel 1 sowie den Vergleichsbeispielen VB 1 bis VB 3 Be handlungsintensitäten von 39 mN/m erreicht wurden, zeigte die Folie gemäß VB 5 trotz identischer Verfahrensweise eine Intensität von nur 37 mN/m und die gemäß VB 4 und VB 6 lediglich eine Behandlungsintensität von 36 mN/m.

Metallhaftung

Die Folien wurden 14 Tage nach ihrer Produktion (Kurzzeitbeurteilung) bzw. 4 Monate nach ihrer Produktion (Langzeitbeurteilung) mit Aluminium metallisiert. Die Metallhaftung wurde mittels Klebebandtest beurteilt. Konnte mittels Klebeband überhaupt kein Metall abgelöst werden, so wurde die Metallhaftung mit sehr gut bezeichnet. Bei geringer Metallablösung wurde die Metallhaftung mit gut und bei deutlicher Metallablösung mit schlecht beurteilt.

Der Schmelzflußindex wurde jeweils gemäß DIN 53 735 bei 230 °C und 2,16 kg Belastung ermittelt.

## Ansprüche

1. Metallisierbare, siegelfähige, biaxial orientierte Mehrschichtfolie für die Metallisieranwendung umfassend eine Basisschicht im wesentlichen aus Polypropylen, eine erste polyolefinische siegelfähige Oberflächenschicht und eine zweite polyolefinische metallisierbare Oberflächenschicht, dadurch gekennzeichnet,

daß die zweite polyolefinische metallisierbare Oberflächenschicht ein Propylen-Ethylen-Copolymeres enthält, das einen Ethylengehalt von 1,2 bis 2,8 Gew.-%, einen Verteilungsfaktor $V_F$ von größer 10, eine Schmelzenthalpie $\Delta H_m$ größer 90 J/g und eine Thermooxidationstemperatur $T_{ox}$ von größer 240 °C besitzt.

2. Folie nach Anspruch 1, dadurch gekennzeichnet, daß das Copolymere der zweiten polyolefinischen Oberflächenschicht einen Ethylengehalt von 1,4 bis 1,8 Gew.-%, einen Verteilungsfaktor $V_F$ von größer als 15, eine Schmelzenthalpie $\Delta H_m$ im Bereich von 95 bis 110 J/g und eine Thermooxidationstemperatur $T_{ox}$ von mehr als 245 °C besitzt.

3. Folie nach Anspruch 1 oder 2, dadurch gekennzeichnet, daß die erste polyolefinische siegelfähige Oberflächenschicht ein Antiblockmittel in einer Menge im Bereich von 0,1 bis 1 Gew.-%, bezogen auf das Gewicht der Oberflächenschicht, enthält, wobei das Antiblockmittel einen mittleren Teilchendurchmesser im Bereich von 1 bis 4 µm besitzt und einen Formfaktor von kleiner als 3.

4. Folie nach Anspruch 3, dadurch gekennzeichnet, daß als Antiblockmittel kugelförmige anorganische und/oder organische Teilchen eingesetzt werden.

5. Folie nach einem der Ansprüche 1 bis 4, dadurch gekennzeichnet, daß die zweite polyolefinische metallisierbare Oberflächenschicht einen Stabilisator enthält aus der Stoffklasse der mehrkernigen, sterisch gehinderten Phenole in einer Menge im Bereich von 0,2 bis 0,6 Gew.-%, bezogen auf das Gesamtgewicht der Oberflächenschicht, wobei die Molmasse des Stabilisators größer als 300 g/mol ist.

6. Folie nach Anspruch 5, dadurch gekennzeichnet, daß der Stabilisator eine Molmasse von größer als 700 g/mol besitzt und in einer Menge von 0,3 bis 0,4 Gew.-%, bezogen auf das Gesamtgewicht der Oberflächenschicht, eingesetzt wird.

7. Folie nach einem der Ansprüche 1 bis 6, dadurch gekennzeichnet, daß sie eine Gesamtdicke zwischen 10 und 70 µm, vorzugsweise zwischen 15 und 50 µm, besitzt, wobei die Oberflächenschichten jeweils eine Dicke von 0,5 bis 1 µm aufweisen.

8. Folie nach einem der Ansprüche 1 bis 7, dadurch gekennzeichnet, daß sie auf ihrer zweiten polyolefinischen metallisierbaren Oberflächenschicht eine durch Vakuumaufdampfung von Aluminium entstandene Metallisierung trägt.

9. Metallisierte Folie nach Anspruch 8, dadurch gekennzeichnet, daß die freie Außenseite der Metallisierung einen Schutzüberzug aus einem Polyolefin trägt.

10. Metallisierte Folie nach Anspruch 9, dadurch gekennzeichnet, daß der Schutzüberzug aus Polyethylen besteht.

11. Verwendung einer metallisierten Folie nach Anspruch 9 oder 10 in Verbundmaterialien, insbesondere in Kombination mit transparenten oder opaken Folien aus Kunststoff oder mit Papier.